(19) **Europäisches Patentamt / European Patent Office / Office européen des brevets**

(11) **EP 1 181 819 B1**

(12) **EUROPEAN PATENT SPECIFICATION**

(45) Date of publication and mention
of the grant of the patent:
**05.12.2007 Bulletin 2007/49**

(51) Int Cl.:
*H04N 5/46* (2006.01)      *H04N 9/68* (2006.01)
*H04N 5/455* (2006.01)

(21) Application number: **00925674.4**

(22) Date of filing: **16.05.2000**

(86) International application number:
**PCT/JP2000/003114**

(87) International publication number:
**WO 2000/072588 (30.11.2000 Gazette 2000/48)**

(54) **COLOR SIGNAL REPRODUCING APPARATUS OF A TELEVISION SIGNAL**

VORRICHTUNG ZUR WIEDERGABE DES FARBSIGNALS EINES FERNSEHSIGNALS

DISPOSITIF DE REPRODUCTION D'UN SIGNAL COULEUR DE TELEVISION

(84) Designated Contracting States:
**DE FR**

(30) Priority: **21.05.1999 JP 14182599**

(43) Date of publication of application:
**27.02.2002 Bulletin 2002/09**

(73) Proprietor: **MATSUSHITA ELECTRIC INDUSTRIAL CO., LTD
Kadoma-shi, Osaka 571-8501 (JP)**

(72) Inventors:
 • **TAKETANI, Nobuo
   Kawanishi-shi, Hyogo 666-0034 (JP)**
 • **MORIBE, Hiroshi
   Takatsuki-shi, Osaka 569-0811 (JP)**

 • **MORITA, Hisao
   Hirakata-shi, Osaka 573-0065 (JP)**
 • **SHIBUTANI, Ryuichi
   Takatsuki-shi, Osaka 569-1124 (JP)**

(74) Representative: **Grünecker, Kinkeldey, Stockmair & Schwanhäusser
Anwaltssozietät
Maximilianstrasse 58
80538 München (DE)**

(56) References cited:
 **EP-A- 0 482 768         EP-A- 0 573 295
 US-A- 4 539 583         US-A- 4 661 844
 US-A- 5 661 530**

EP 1 181 819 B1

**Description**

TECHNICAL FIELD

The present invention relates to a color signal reproducing circuit of television receiver of SECAM system, NTSC system, and PAL system, and more particularly to a technology for realizing automatic chroma control (ACC) of high precision by keeping constant the amplitude of color subcarrier signal even in the case where a S/N of color subcarrier signal is lowered, while using the color signal reproducing circuit commonly in three major television systems in the world.

BACKGROUND ART

As television receivers come into wide use around the world, recently, receivers of different televisions systems are demanded to be used commonly and higher in performance. For example, the color signal reproducing circuit is demanded to be used commonly and enhanced in noise immunity.

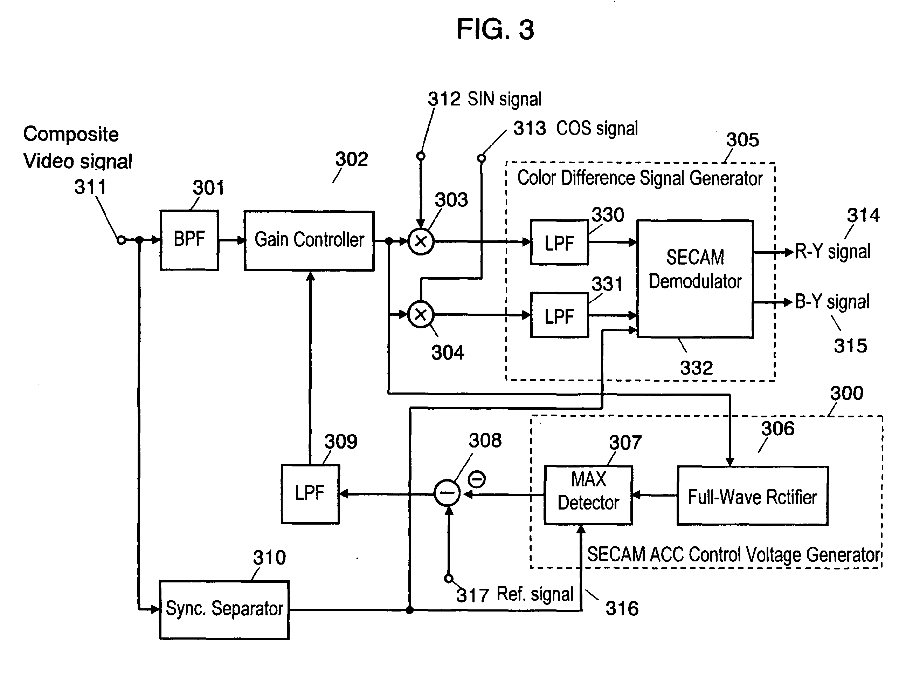

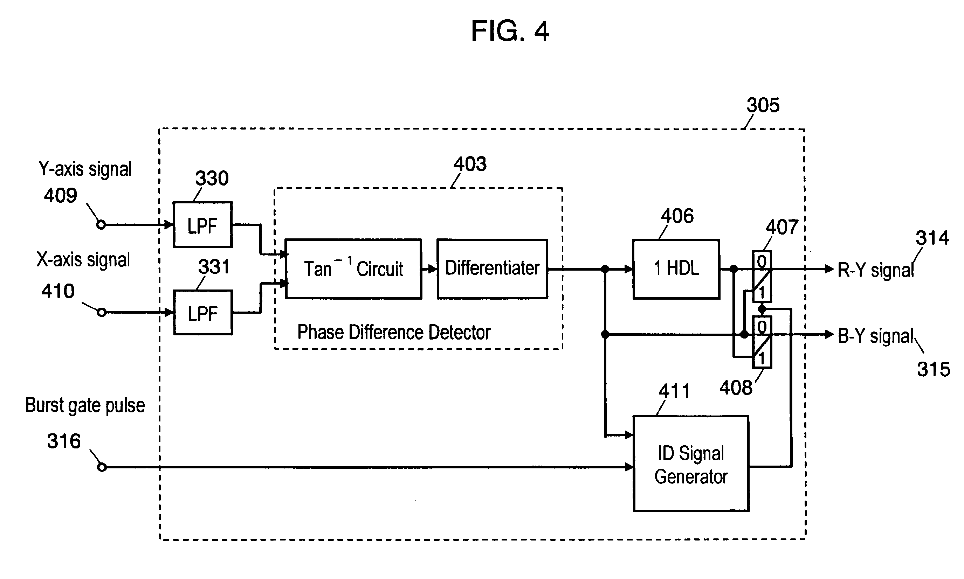

Referring to Fig. 3 and Fig. 4, a conventional example of SECAM color signal reproducing apparatus is described below.

Fig. 3 is a block diagram of a conventional color signal reproducing circuit of a receiver for receiving and reproducing television signal of SECAM broadcasting system. Fig. 4 is a block diagram of a color difference signal generator in Fig. 3.

In Fig. 3, a band pass filter (BPF) 301 separates the color subcarrier signal from SECAM composite video signal 311 modulated according to SECAM, and issues it by limiting its band.

A gain controller 302 adjusts the amplitude of color subcarrier signal, and issues a color subcarrier signal adjusted in amplitude. A multiplier 303 multiplies an output signal of the gain controller 302 by a SIN signal 312, and issues a Y-axis signal 409 (shown in Fig. 4). A multiplier 304 multiplies an output signal of the gain controller 302 by a COS signal 313, and issues an X-axis signal 410 (shown in Fig. 4).

A color difference signal generator 305 is composed of low pass filters (LPFs) 330, 331 for removing the harmonic components of the X-axis signal 410 and Y-axis signal 409, and a SECAM demodulator 332 for demodulating the output signals of the LPFs 330, 331 by using phase difference detector and others.

The color difference signal generator 305 generates color difference signals R-Y signal 314 and B-Y signal 315 from the X-, and Y-axis signals 410, 409, and issues them.

A full-wave rectifier 306 rectifies the color subcarrier signal issued from the gain controller 302 in the full-wave. A MAX detector 307 detects the maximum amplitude in the burst gate pulse period by the output signal of the full-wave rectifier 306, and issues it. The full-wave rectifier 306 and MAX detector 307 compose a SECAM ACC control voltage generator 300. Its output signal controls the gain controller 302, and adjusts the amplitude of the color subcarrier signal. A subtractor 308 issues a result of subtracting the output signal of the MAX detector 307 from a predetermined reference signal 317. The LPF 309 has a cut-off frequency of several hertz, and issues a low frequency component of output signal of the MAX detector to the gain controller 302.

A loop circuit composed of the gain controller 302, ACC control voltage generator 300, subtractor 308, and LPF 309 functions as an ACC circuit.

A synchronizing separator 310 separates a synchronizing signal from a composite video signal 311, and generates a burst gate pulse 316 to be entered in the MAX detector 307.

The burst gate pulse is a pulse which is high (H) in burst period, and low (L) in other period. The SIN signal 312 is a SIN component of local subcarrier signal, and its frequency is 4.28 MHz. The COS signal 313 is a COS component of local subcarrier signal, and its frequency is also 4.28 MHz. The COS signal 313 and SIN signal 312 mutually differ in phase by 90 degrees.

Referring to Fig. 4, the color difference signal generator 305 is briefly described below. In Fig. 4, a phase difference detector 403 is composed of an arc tangent circuit ($\tan^{-1}$ circuit) and a differentiator. The phase difference detector 403 detects the angle of X- and Y-axis signals (on the axes of orthogonal coordinates) by the $\tan^{-1}$ circuit, and differentiates the output signal so as to detect the phase difference (the angle difference on the axes of orthogonal coordinates).

A one-horizontal scanning period delay circuit (1HDL) 406 is a circuit for delaying the output signal of the differentiator by one horizontal scanning period. Selectors 407, 408 are circuits for selecting either the R-Y signal or the B-Y signal by an output signal of an ID signal generator 411.

The phase difference detector 403, 1HDL 406, ID signal generator 411, and selectors 407, 408 are combined to compose a SECAM demodulator.

The Y-axis signal 409 is a signal standardized to the signal on the Y-axis in the orthogonal coordinates, by multiplying the color subcarrier signal by the SIN signal 312. The X-axis signal 410 is a signal standardized to the signal on the X-axis in the orthogonal coordinates, by multiplying the color subcarrier signal by the COS signal 313. The ID signal generator 411 is a circuit for generating a line ID signal of SECAM signal for separating the R-Y signal and B-Y signal.

In thus constituted color difference signal generator 305, the operation is described below.

The Y-axis signal 409 and X-axis signal 410 are generated by multiplying SIN and COS signals at 4.28 MHz each respectively by the frequency-modulated color subcarrier signal.

The SECAM color subcarrier signal is frequency-modulated, and its frequency band is about 3.9 MHz to 4.8 MHz. Hence, the output signals of the multipliers 303, 304 contain the beat component of base band of about $\pm 0.5$ MHz and its harmonic component.

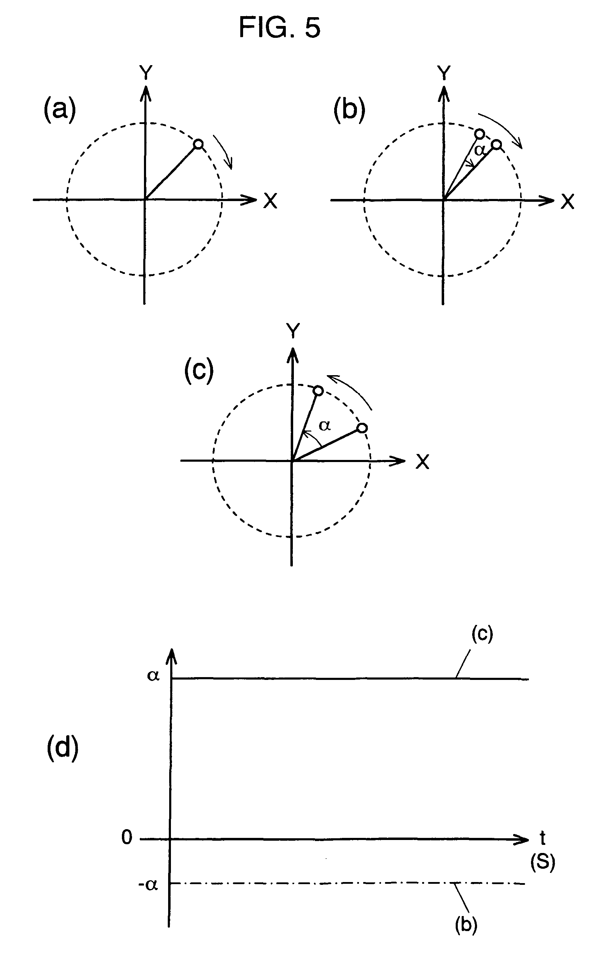

By the LPFs 330, 331, harmonic components of the signal are filtered, and only the beat component signal in the base band is allowed to pass. For example, supposing the frequency of the frequency-modulated signal to be 4.3 MHz, the beat component frequency in the base band is 4.3 - 4.28 = 0.02 (MHz). The behavior of the base band signal on the orthogonal axis is turning around the circumference as indicated by dotted line in Fig. 5 (a). Its period is 0.02 MHz, and the turning direction is the arrow direction shown in Fig. 5 (a). Supposing the frequency of the frequency-modulated signal to be 4.2 MHz, the behavior of the beat component on the orthogonal axis is turning in a period of 0.08 MHz (4.28 - 4.2), and the turning direction is opposite to the arrow direction in Fig. 5 (a).

Passing through the LPFs 330, 331, when beat components of X- and Y-axis signals are put into the phase difference detector 403, the phase difference on the axes of orthogonal coordinates of the two signals (the change amount of phase in unit time, being equal to $\alpha$ in Fig. 5 (b)) is detected.

For example, when the frequency of the SECAM color subcarrier signal is 4.3 MHz, the phase difference $\alpha$ is detected as shown in Fig. 5 (b), or when the frequency is 4.2 MHz, the phase difference $\alpha$ (phase difference per unit time) is detected as in Fig. 5 (c), and issued. These values of $\alpha$ are expressed on the time axis as shown in Fig. 5 (d).

When the signal detected in the phase difference detector 403 is put into the ID signal generator 411, a line ID signal is issued. Since the SECAM color subcarrier signal is transmitting R-Y and B-Y signals in every line, the signal for detecting which signal is being transmitted is called the line ID signal.

In Fig. 4, by the output of the phase difference detector 403, H is assigned to R-Y signal, and L to B-Y signal. Using the line ID signal and selectors 407,408, the R-Y and B-Y signals can be separated.

The operation of the ACC circuit is described below. The ACC circuit is a loop circuit composed of gain controller 302, ACC control voltage generator 300, subtractor 308, and LPF 309.

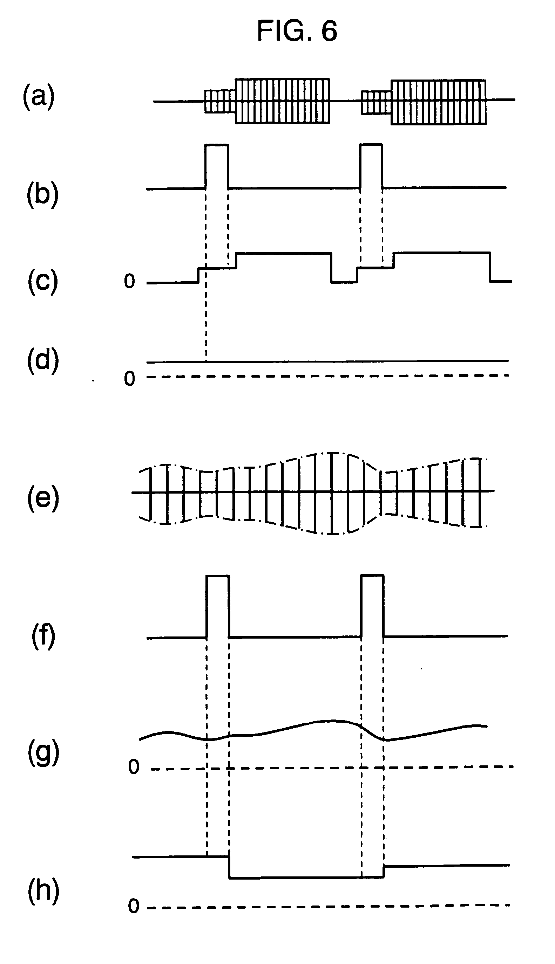

Fig. 6 is a waveform diagram of parts of the color signal reproducing circuit for explaining the operation of ACC. Waveform (a) is an output signal (color subcarrier signal) of the BPF 301. The composite video signal is put into the BPF 301, and, after removing signals outside of the color subcarrier band, entered into the gain controller 302. The output signal of this circuit is put into the full-wave rectifier 306 of the ACC control voltage generator 300, and the amplitude of color subcarrier signal is issued. Its waveform is shown in Fig. 6 (c).

The MAX detector 307 issues the largest amplitude value in the period of H of the burst gate pulse 316 (Fig. 6 (b)), and hence its waveform is as shown in Fig. 6 (d). The difference of this signal and the reference signal 317 is calculated, and its output signal is put into the LPF 309, and the gain controller 302 is controlled by this output signal.

For example, when the amplitude of the gain controller 302 is large, the output of the MAX detector 307 is also large, and the output of the subtractor 308 is a minus signal. It hence functions to lower the gain of the gain controller 302. As a result, the output signal of the MAX detector 307 converges to nearly coincide with the reference signal 317.

That is, by the loop circuit composed of the gain controller 302, full-wave rectifier 306, MAX detector 307, subtractor 308, and LPF 309, the output signal of the MAX detector 307 is automatically adjusted to the value set by the reference signal 317. In other words, the output signal of the gain controller 302 is automatically adjusted to a certain amplitude, and the input levels of the multipliers 303, 304 are kept at a specified amplitude.

In such configuration, however, the following problems are known.

For example, supposing the noise as shown in Fig. 6 (e) to be entered, the output of the full-wave rectifier 306 produces a crest value of noise as shown in Fig. 6 (g). The MAX detector 309 issues a waveform as shown in Fig. 6 (h) in order to deliver the largest amplitude value in the period of H of the burst gate pulse 316 (Fig. 6 (f)). In principle, the input signal is only the noise without color subcarrier signal, and therefore the output of the MAX detector 307 must be 0. Actually, however, in the conventional ACC circuit configuration as shown in Fig. 3, the noise may be falsely recognized as signal. By this wrong recognition, the ACC operation may be misoperation.

## SUMMARY OF THE INVENTION

To solve the problems, a color signal reproducing apparatus according to claim 1 is proposed.

The color signal reproducing apparatus of the invention is able to keep constant the level of the color subcarrier in case where the S/N is lowered in the color subcarrier signal of SECAM system by multiplying the color subcarrier signal of SECAM system by SIN or COS signals of local subcarrier signal, and extracting only the lowest base band component of the beat components of the output signal, , , and realize automatic chroma control of high precision.

Further, aside from output of the control signal for controlling the ACC of SECAM system from the ACC control voltage generator, signals in the burst gate pulse period each from the X-axis and Y-axis are cumulatively added, and the signal of low frequency component is extracted, so that its low frequency component can be also issued, and therefore the color signal reproducing apparatus of different television system such as NTSC system can be realized without increasing the circuit scale so much.

BRIEF DESCRIPTION OF THE DRAWINGS

Fig. 1 is a block diagram of a color signal reproducing circuit in embodiment 1 of the invention.
Fig. 2 is a block diagram of a color signal reproducing circuit in embodiment 2 of the invention.
Fig. 3 is a block diagram of a conventional color signal reproducing circuit.
Fig. 4 is a block diagram of a color difference signal generator in the conventional color signal reproducing circuit.
Fig. 5 is an operation explanatory diagram of the color difference signal generator in Fig. 4.
Fig. 6 is a waveform diagram of parts of the color signal reproducing circuit for explaining a conventional ACC circuit.
Fig. 7 is a waveform diagram of parts of the color signal reproducing circuit for explaining the ACC circuit in embodiments 1 and 2 of the invention.
Fig. 8 is an operation explanatory diagram of color signal reproducing circuit in embodiments 1 and 2 of the invention.
Fig. 9 is an operation explanatory diagram of color signal reproducing circuit in embodiment 2 of the invention.

DESCERIPTION of PREFERED EMBODIMENT

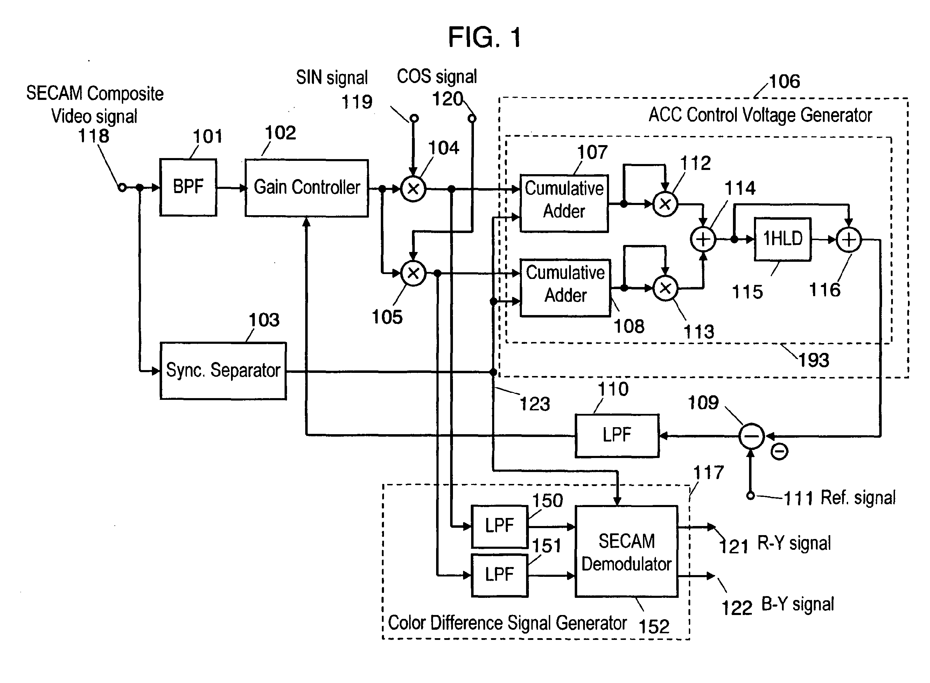

An embodiment of the invention is described below by reference to Fig. 1. Fig. 1 is a block diagram of a color signal reproducing circuit in embodiment 1 of the invention.

In Fig. 1, a BPF 101 separates a color subcarrier signal from a SECAM composite video signal 118, limits the band, and issues a color subcarrier signal. A gain controller 102 adjusts the amplitude of the color subcarrier signal, and issues its signal. A synchronizing separator 103 separates the synchronizing signal from the composite video signal 118, and generates a burst gate pulse 123 to be entered into cumulative adders 107, 108 and color difference signal generator 117 described later.

A first multiplier 104 multiplies the color subcarrier signal by SIN signal 119, and issues a Y-axis signal. A second multiplier 105 multiplies the color subcarrier signal by COS signal 120, and issues an X-axis signal.

A first cumulative adder 107 cumulatively adds the signals in the burst gate pulse period from the output signal of the multiplier 104, and extracts and issues the low frequency component in the period. A second cumulative adder 108 cumulatively adds the signals in the burst gate pulse period from the output signal of the multiplier 105, and extracts and issues the low frequency component in the period.

A third multiplier 112 squares the output signal of the cumulative adder 107. A fourth multiplier 113 squares the output signal of the cumulative adder 108. A first adder 114 sums up the output signals of the two multipliers 112, 113.

A first 1HDL 115 delays the output signal of the adder 114 by the period of one horizontal scanning period. A second adder 116 sums up the output signal of the adder 114 and the output signal of the 1HDL 115, and issues the average amplitude of the color subcarrier signal.

The cumulative adders 107, 108, multipliers 112, 113, adder 114, 1HDL 115, and adder 116 compose a SECAM ACC control voltage generator 106, which generates a control voltage for controlling the gain controller 102.

Moreover, the square multipliers 112, 113, adder 114, 1HDL 115, and adder 116 form an amplitude detector 193, which detects the amplitude of the burst signal of SECAM color subcarrier signal. A subtractor 109 issues the difference between the output signal of the adder 116 and a predetermined reference signal 111. The LPF 110, having a cut-off frequency of several hertz, removes undesired noise components from the output signal of the subtractor 109. The reference signal 111 is preset for determining the convergent amplitude value of the ACC circuit.

The color difference signal generator 117 has the same characteristic as the color difference signal generator 305 in Fig. 3, and is composed of LPFs 150, 151 for removing harmonic components of Y-axis signal and X-axis signal issued from the multipliers 104, 105, and a SECAM demodulator 152 for demodulating the output signals of the LPFs 150, 151 by using phase difference detector and others, and generates color difference signals from X-, Y-axis signals, that is, R-Y signal 121 and B-Y signal 122, and issues them.

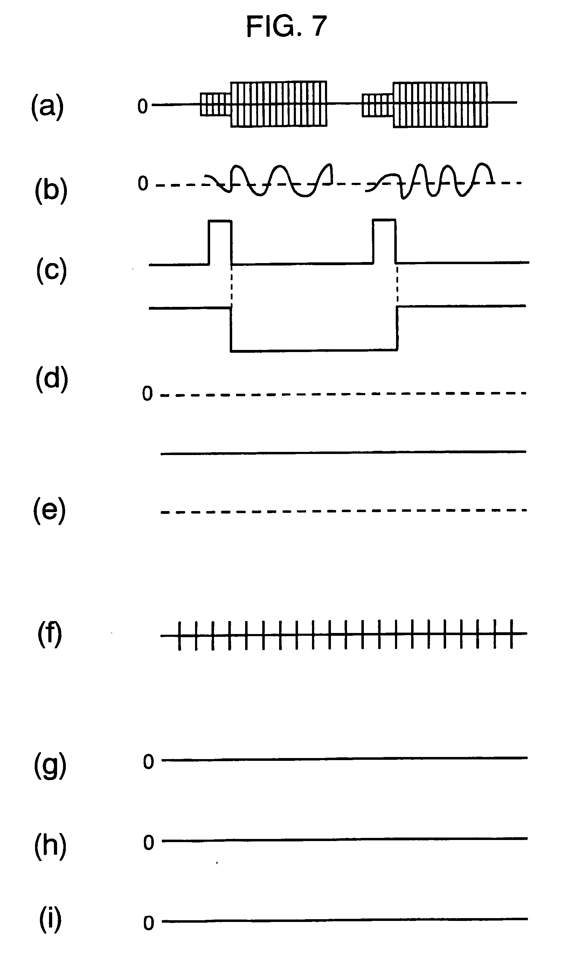

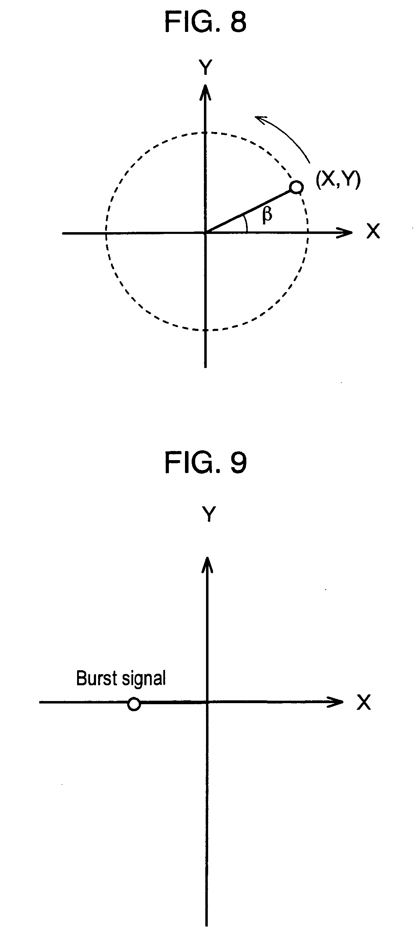

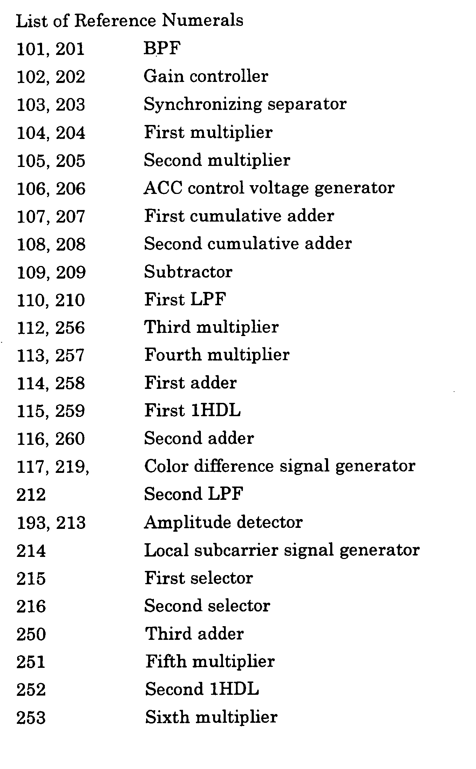

The operation of the ACC circuit of the SECAM color signal reproducing circuit having such configuration is described below while referring to Fig. 1, Fig. 4, Fig. 7, and Fig. 8. Fig. 7 is a waveform diagram of parts of the color signal reproducing circuit for explaining the ACC circuit in embodiments 1 and 2 of the invention. Fig. 8 is an operation explanatory diagram of color signal reproducing circuit in embodiments 1 and 2 of the invention.

The ACC circuit is a loop circuit composed of gain controller 102, multipliers 104, 105, ACC control voltage generator 106, subtractor 109, and LPF 110.

Fig. 7 (a) shows the waveform of the color subcarrier having signals outside of the color subcarrier band removed, by feeding the SECAM composite video signal 118 into the BPF 101. The color subcarrier signal is put into the multipliers 104, 105 through the gain controller 102. This input signal is multiplied by SIN signal 119 and COS signal 120 having a same frequency of 4.28 MHz in the multipliers 104, 105.

The frequency band of the SECAM color subcarrier signal is in a range of about 3.9 MHz to 4.8 MHz, and therefore the output components of the multipliers 104, 105 contain beat components of base band of about $\pm 0.5$ MHz and harmonic components thereof. Of this signal, the waveform of the base band component signal is shown in Fig. 7 (b).

In the cumulative adders 107, 108 of the ACC control voltage generator 106, the output signals of the multipliers 104, 105 are extracted for the period of H of the burst gate pulse 123, and added cumulatively. As a result, harmonic components are removed, and beat components in the burst gate pulse period are taken out. That is, only the beat components of the base band in the burst gate pulse period are taken out from the cumulative adders 107, 108.

On the other hand, in Fig. 8, the output signal of the cumulative adder 107 is the value on the Y-axis, and the output signal of the cumulative adder 108 is on the X-axis, and these signals are plotted in the orthogonal coordinates. As shown in Fig. 8, the signal is a signal rotating on the circumference in the center of (0, 0). In the multipliers 104, 105, the color subcarrier signal is multiplied by the SIN signal 119 and COS signal 120 deviated in phase by 90 degrees, and the components of the base band are extracted by the cumulative adders 107, 108. Herein, supposing the output signal of the cumulative adder 107 to be Y and the output signal of the cumulative adder 108 to be X, point (X, Y) passes on the circumference shown in Fig. 8, and hence the following relation (formula 1) is established.

## Formula 1

$$(X \times X) + (Y \times Y) = constant$$

That is, the sum signal (output signal of the adder 114) of the square signal of X (output signal of multiplier 112) and square signal of Y (output signal of multiplier 113) has a constant amplitude.

This amplitude is proportional to the amplitude of the burst signal of the SECAM color subcarrier signal issued from the gain controller 102, and, in other words, the adder 114 is issuing an amplitude of burst signal of SECAM color subcarrier signal. It makes use of the fact that the amplitude of the burst signal is equal to the square sum of the beat components of the base band.

In the SECAM system, since the frequency of burst of color subcarrier signal changes in every one horizontal scanning (1H), the waveform of the output signal of the adder 114 is a signal changing in amplitude by every 1H as shown in Fig. 7 (d).

The average signal (output signal of adder 116) by adding the output signal of the adder 114 and the signal delayed from this signal by 1H by the 1HDL 115 is a DC signal free of beat component as shown in Fig. 7 (e).

Feeding this signal into the subtractor 109, the difference between the reference signal and this signal is calculated, and the result is filtered by the LPF 110, thereby controlling the gain controller 102.

Herein, for example, if the amplitude of the gain controller 102 is large, the output of the adder 116 is also large, and the output of the subtractor 109 becomes a minus signal. It hence works to lower the gain of the gain controller 102. As a result, the ACC circuit converges at a nearly coinciding point of the output signal of the adder 116 and reference signal 111, and the amplitude of the SECAM color subcarrier signal can be automatically adjusted to a specific level.

On the other hand, the operation when noise signal gets into the ACC circuit is described below. Fig. 7 (f) shows the output signal of the BPF 101 when random noise is fed into the input point of the composite video signal 118. When this signal is fed into the multipliers 104, 105 through the gain controller 102, the output signal becomes a random signal centered on 0 as shown in Fig. 7 (g), and when it is put into the cumulative adders 107, 108, the output signal amplitude is 0 as shown in Fig. 7 (h). As a result of passing this signal into the square multipliers 112, 113, 1HDL 115, and adder 116, too, the signal is 0 as shown in Fig. 7 (i).

Thus, according to the embodiment, random noise components can be removed.

In this embodiment, as described herein, by passing the output signals from the multipliers 104, 105 through the ACC control voltage generator 106 composed of cumulative adders 107, 108, multipliers 112, 113, adder 114, 1HDL 115, and adder 116, noise is removed, the amplitude of the burst signal of the SECAM color subcarrier signal is detected, and the ACC control voltage is generated, and added to the gain controller 102 through the subtractor 109 and LPF 110, and therefore in the configuration of this ACC circuit, random noise components can be removed, and the automatic chroma control is realized accurately.

Embodiment 2 of the invention is described below.

In embodiment 2, on the basis of embodiment 1, it is designed to use the color signal reproducing circuit commonly for SECAM system and NTSC system.

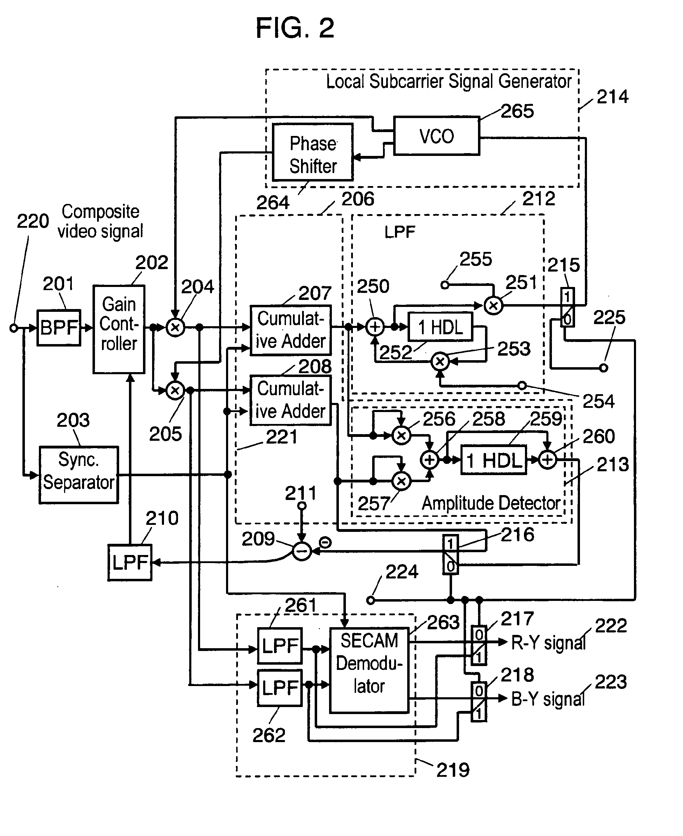

Fig. 2 is a block diagram of a color signal reproducing circuit in embodiment 2 of the invention. In Fig. 2, a BPF 201 separates the SECAM color subcarrier signal and limits the band in the case of input of SECAM composite video signal, or separates the NTSC color subcarrier signal and limits the band in the case of input of NTSC composite video signal, and issues it.

A gain controller 202 adjusts the amplitude of SECAM/NTSC color subcarrier signal, and issues. A synchronizing separator 203 separates the synchronizing signal from an entered composite video signal 220, and generates a burst gate pulse 221 to be entered into cumulative adders 207, 208, and color difference signal generator 219 described later.

A first multiplier 204 multiplies the SECAM/NTSC color subcarrier signal adjusted in amplitude in the gain controller 202 by the SIN signal, and issues a Y-axis signal. A second multiplier 205 multiplies the SECAM/NTSC color subcarrier signal adjusted in amplitude in the gain controller 102 by the COS signal, and issues an X-axis signal.

A first cumulative adder 207 cumulatively adds the signals in the burst gate pulse period from the X-axis signal, and issues the low frequency component in the period. A second cumulative adder 208 cumulatively adds the signals in the burst gate pulse period from the X-axis signal, and issues the low frequency component in the period. A third multiplier 256 squares the output signal of the cumulative adder 207. A fourth multiplier 257 squares the output signal of the cumulative adder 208. A first adder 258 sums up the output signals of the multipliers 256, 257. A first 1HDL 259 delays the output signal of the adder 258 by the time of one horizontal scanning period. A second adder 260 sums up the output signal of the adder 258 and the output signal of the 1HDL 259, and issues the average amplitude.

The cumulative adders 207, 208, multipliers 256, 257, adder 258, 1HDL 259, and adder 260 compose an ACC control voltage generator 206, which generates a control voltage for controlling the gain controller 202.

Moreover, the square multipliers 256, 257, adder 258, 1HDL 259, and adder 260 form an amplitude detector 213, which detects the amplitude of the burst signal of SECAM color subcarrier signal.

A subtractor 209 issues the difference between the output signal selected by a selector 216 described later and a predetermined reference signal 211.

A first LPF 210, having a cut-off frequency of several hertz, removes undesired noise components from the output signal of the subtractor 209. The reference signal 211 is preset for determining the convergent amplitude value of the ACC circuit.

A second LPF 212 is composed of a third adder 250, a fifth multiplier 251 of which multiplication constant is set by a control signal 255, a sixth multiplier 253 of which multiplication constant is set by a control signal 254, and a 1HDL 252. The LPF 212, having a cut-off frequency of several hertz, removes undesired noise components from the output signal of the cumulative adder 207, and composes an automatic phase control circuit (APC circuit) necessary at the time of NTSC demodulation.

A local subcarrier signal generator 214 is composed of a voltage controlled oscillator (VCO) 265 capable of varying the oscillation frequency depending on the control voltage, and issuing a SIN signal, and a phase shifter 264 for shifting the phase of the SIN signal of the VCO by 90 degrees and generating a COS signal, and therefore the oscillation frequency is controlled by a fixed signal 225 (preset data value) or output signal of the second LPF 212 selected and issued from a selector 215 described later.

The selector 215 selects and issues either the output signal of the LPF 212 and fixed signal 225. A selector 216 selects and issues either the output signal of the amplitude detector 213 or the output signal of the cumulative adder 208. A selector 217 selects and issues either the R-Y signal of NTSC system issued from a color difference signal generator 219 described later in NTSC demodulation mode or the R-Y signal of SECAM system issued in SECAM demodulation mode. A selector 218 selects and issues either the B-Y signal of NTSC system issued from the color difference signal generator 219 described later in NTSC demodulation mode or the B-Y signal of SECAM system issued in SECAM demodulation mode.

The color difference signal generator 219 is composed same as the color difference signal generator 117, and delivers R-Y, B-Y signals from the LPFs 262, 263 in NTSC demodulation mode, and delivers R-Y, B-Y signals from the SECAM demodulator 263 in SECAM demodulation mode.

The SECAM/NTSC composite video signal 220 is a signal of NTSC system in NTSC demodulation mode, and a signal of SECAM system in SECAM demodulation mode. A burst gate pulse 221 is a signal generated in the synchronizing separator 203, for determining the cumulative time of the cumulative adders 207, 208. The R-Y signal 222 is an R-Y signal demodulated in the NTSC demodulation mode or SECAM demodulation mode. The BY signal 223 is a B-Y signal demodulated in the NTSC demodulation mode or SECAM demodulation mode. A system control signal 224 is a control signal for selecting the NTSC demodulation mode at H, and the SECAM demodulation mode at L.

In the color signal reproducing circuit having such configuration, the operation is described below.

Supposing the system control signal to be L, embodiment 2 operates in SECAM demodulation mode. The selector 215 selects and issues the fixed signal 225. The data value of the fixed signal 225 is set so that the local subcarrier signal generator 214 may deliver a SIN signal having a frequency of 4.28 MHz, and a COS signal differing in phase by 90 degrees therefrom. The selectors 217, 218 select and issue the SECAM demodulated R-Y signal 222 and B-Y signal 223. The selector 216 selects and issues the output signal of the amplitude detector 213 for detecting a SECAM burst level.

In this way, by setting the system control signal 224 to L, embodiment 2 has exactly the same configuration as in embodiment 1, and functions as the color signal reproducing circuit of SECAM demodulation mode.

On the other hand, by setting the system control signal to H, embodiment 2 operates in the NTSC demodulation mode. The selector 215 selects the output signal of the LPF 212. The multiplier 204, cumulative adder 207, LPF 212, and local subcarrier signal generator 214 compose a loop circuit. This loop circuit functions as APC circuit.

The operation of the APC circuit is described below.

For example, when the frequency of the SIN signal issued from the local subcarrier generator 214 is higher then the color subcarrier frequency of the input composite signal 220, its beat component is delivered from the multiplier 204, so that the signal level becomes higher. By passing this output signal through the cumulative adder 207, the signals of the burst gate period only are taken out, and undesired noise is removed in the LPF 212, and its output signal is put into the local subcarrier generator 214.

The local subcarrier generator 214 functions, when the input control signal is high, to lower the frequency of the SIN signal (same for COS signal), and when the input control signal is low, it functions to raise the frequency of the SIN signal (same for COS signal), and, as a result, the frequency of the output signal of the local subcarrier signal generator 214 converges to the same frequency as the composite video signal 220.

The position of the burst signal on the axes of orthogonal coordinates is set to be positioned on the X-axis as shown in Fig. 9.

When the system control signal is H, the selector 216 is set to the H side, and the loop circuit composed of the gain controller 202, multiplier 205, cumulative adder 208, subtractor 209, and LPF 210 functions as an ACC circuit necessary for NTSC color signal reproduction.

The ACC circuit is briefly described below.

In the multiplier 205, the output signal of the gain controller 202 are multiplied by the COS signal, and the X-axis signal is issued to the cumulative adder 208. The base band component of the X-axis signal appears on the X-axis on the axes of orthogonal coordinates as shown in Fig. 9. The cumulative adder 208 removes harmonic components of the X-axis signal, extracts the average of signal level in burst period, and sends out to the subtractor 209.

The subtractor 209 issues the difference between this output signal and reference signal 211. The LPF 210 removes undesired noise component from the differential signal, and controls the gain controller 202.

When the output signal of the gain controller 202 is large, the output signal of the cumulative adder 208 is large, and the output signal of the subtractor 209 becomes smaller. The ACC circuit functions to decrease the output signal of the gain controller 202. In other words, the loop circuit composed of the gain controller 202, multiplier 205, cumulative adder 208, subtractor 209, and LPF 210 operates so that the output signal of the cumulative adder 208 may converge to the same level as the reference signal 211, thereby composing an ACC circuit necessary for NTSC color signal reproduction.

When the system control signal is H, the selectors 217, 218 select the output signals of the LPFs 261, 262. These signals are signals obtained by removing harmonic components from the output signals of the multipliers 204, 205, which directly become R-Y signal and B-Y signal of the NTSC system.

Thus, by setting the system control signal to H, the system can be changed over from the SECAM demodulation mode to the NTSC demodulation mode.

Moreover, the configuration of the LPF 212 is similar to the configuration of the amplitude detector 213, except that one adder is omitted, and only by varying the connection wiring on the LSI, either the amplitude detector 213 or the LPF 212 can be composed.

According to the circuit configuration of the embodiment, the color signal reproducing circuit is realized and commonly used in SECAM system and NTSC system without increasing the circuit scale of the LSI. The characteristics of the color signal reproducing circuit are also same as the performance of embodiment 1.

Incidentally, the NTSC color signal reproducing circuit in embodiment 2 may be easily modified to a PAL color signal reproducing circuit without requiring any particular technique.

Embodiments 1 and 2 of the color signal reproducing apparatus of television signal of the invention are described in circuit block diagrams, and the invention also includes a configuration of the ACC control voltage generator and second low pass filter being composed of a digital signal processor mounting a computer program for realizing the functions of the circuits explained in embodiments 1 and 2.

INDUSTRIAL APPLICABILITY

The invention realizes the common use of color signal reproducing circuit in SECAM system and NTSC system without increasing the circuit scale of LSI, and also improves the noise immunity of the color signal reproducing circuit.

Thus, the invention brings about significant practical effects.

**Claims**

1. A color signal reproducing apparatus of a television signal comprising:

   a band pass filter for separating and outputting a color subcarrier signal from a SECAM composite video signal and limiting the band,
   a gain controller for adjusting and outputting the amplitude of said color subcarrier signal,
   a synchronizing separator for separating a synchronizing signal from said composite video signal, and generating and outputting a burst gate pulse,
   a first multiplier for multiplying the output signal of said gain controller by a sine component of a local subcarrier signal, and outputting a Y-axis signal,
   a second multiplier for multiplying the output signal of said gain controller by a cosine component of the local subcarrier signal, and outputting an X-axis signal,
   an ACC control voltage generator for cumulatively adding said X-axis signal and said Y-axis signal in said burst gate pulse period, detecting low frequency components of the X-axis signal and the Y-axis signal respectively, squaring and summing each cumulatively added signal, and detecting the amplitude of color subcarrier,
   a subtractor for calculating the difference between the amplitude of the color subcarrier detected by said ACC control voltage generator and a specified reference signal,
   a first low pass filter for filtering high frequency components from the output signal of said subtractor, and
   a color difference signal generator for generating a color difference signal from said X-axis signal and said Y-axis signal.

2. A color signal reproducing apparatus of a television signal as claimed in claim 1, wherein said color difference signal generator for generating a color difference signal further outputs a color difference signal of the television system selected by the system control signal which selects the demodulation mode of the television system,
   and further comprising

   a second low pass filter for removing an undesired noise component from one of the low frequency component signals detected by said ACC control voltage generator,
   a local subcarrier signal generator capable of varying the oscillation frequency by the control voltage, for outputting said sine signal and cosine signal of said local subcarrier signal,
   a first selector for selecting either the fixed signal preset as said control voltage or the output signal of said second low pass filter by said system control signal, and sending to said local subcarrier signal generator, and
   a second selector for selecting either one of the low frequency component signals detected by said ACC control voltage generator or the amplitude of the color subcarrier by said system control signal, and sending it to said subtractor,

   wherein the color signal reproduction mode of first or second television system is selected by said system control signal.

3. The color signal reproducing apparatus of a television signal of claim 1 or 2, wherein said ACC control voltage generator is composed of a first cumulative adder for cumulatively adding said Y-axis signals in said burst gate pulse period, and removing low frequency components,
   and further comprising,

   a second cumulative adder for cumulatively adding said X-axis signals in said burst gate pulse period, and removing low frequency components, and
   an amplitude detector for squaring and summing the output signals of said first and second cumulative adders, and detecting the amplitude of the color subcarrier signal as the ACC control voltage.

4. The color signal reproducing apparatus of a television signal of claim 3, wherein said amplitude detector comprises a third multiplier for squaring the output signal of said first cumulative adder,
   and further comprising,

   a fourth multiplier for squaring the output signal of said second cumulative adder,
   a first adder for summing the output signals of said third multiplier and said fourth multiplier,
   a delay circuit for delaying the output signal of said first adder by one horizontal scanning period, and
   a second adder for summing the output signal of said delay circuit and the output signal of said first adder, and issuing the average amplitude of color subcarrier signal as the ACC control voltage.

5. The color signal reproducing apparatus of a television signal of claim 1 or 2, wherein said ACC control voltage generator comprises a digital signal processor performing:

a step of cumulatively adding the signals in said burst gate pulse period from said X-axis signal, and removing low frequency components,
a step of cumulatively adding the signals in said burst gate pulse period from said Y-axis signal, and removing low frequency components,
a step of squaring low frequency components of said X-axis signal and said Y-axis signal respetively, and summing the sqared signals,
a step of delaying the summed signal by one horizontal scanning period, and
a step of adding the delayed signal and non-delayed signal, and issuing the average amplitude of said color subcarrier signal.

6. The color signal reproducing apparatus of a television signal of claim 2, wherein said second low pass filter is composed of a delay circuit for delaying the input signal by one horizontal scanning period, a third adder, a fifth multiplier, and a sixth multiplier,

said third adder sums up the output signals of said first cumulative adder and said sixth multiplier,
said delay circuit delays the output signal of said third adder,
said fifth multiplier multiplies said third adder by a constant, and
said sixth multiplier multiplies the output signal of said delay circuit by a constant.

7. The color signal reproducing apparatus of television signal of claim 2, wherein said second low pass filter comprises a digital signal processor performing:

an adding step,
a delaying step for delaying a signal by one horizontal scanning period,
a first multiplying step, and
a second multiplying step,

in which said adding step adds the output value of said first cumulative adder and the value multiplied at said first multiplying step,
said delaying step delays the value added at said adding step,
said first multiplying step multiplies the value delayed at said delaying step by a constant, and
said second multiplying step multiplies the value added at said adding step by a constant.

**Patentansprüche**

1. Vorrichtung zur Wiedergabe des Farbsignals eines Fernsehsignals, die umfasst:

ein Bandpassfilter, das ein Farb-Hilfsträgersignal von einem SECAM-Video-Mischsignal trennt und ausgibt und das Band begrenzt,
eine Verstärkungs-Steuereinheit, die die Amplitude des Farb-Hilfsträgersignals reguliert und ausgibt,
einen Synchronisierungs-Separator, der ein Synchronisierungssignal von dem Video-Mischsignal trennt und ein Burstgate-Signal erzeugt und ausgibt,
einen ersten Multiplizierer, der das Ausgangssignal der Verstärkungs-Steuereinheit mit einer Sinuskomponente eines lokalen Hilfsträgersignals multipliziert und ein Y-Achsen-Signal ausgibt,
einen zweiten Multiplizierer, der das Ausgangssignal der Verstärkungs-Steuereinheit mit einer Kosinus-Komponente des lokalen Hilfsträgersignals multipliziert und ein X-Achsen-Signal ausgibt,
einen ACC-Steuerspannungs-Generator, der das X-Achsen-Signal und das Y-Achsen-Signal in der Burstgate-Impulsperiode kumulativ addiert, die Niederfrequenzkomponenten des X-Achsen-Signals bzw. des Y-Achsen-Signals erfasst, jedes kumulativ addierte Signal quadriert und summiert und die Amplitude des Farb-Hilfsträgers erfasst,
einen Subtrahierer zum Berechnen der Differenz zwischen der durch den ACC-Steuerspannungs-Generator erfassten Amplitude des Farb-Hilfsträgers und einem spezifizierten Bezugssignal,

ein erstes Tiefpassfilter zum Filtern von Hochfrequenzkomponenten aus dem Ausgangssignal des Subtrahierers, und

einen Farbdifferenzsignal-Generator zum Erzeugen eines Farbdifferenzsignals aus dem X-Achsen-Signal und dem Y-Achsen-Signal.

2.  Vorrichtung zur Wiedergabe des Farbsignals eines Fernsehsignals nach Anspruch 1, wobei der Farbdifferenzsignal-Generator zum Erzeugen eines Farbdifferenzsignals des Weiteren ein Farbdifferenzsignal des Fernsehsystems ausgibt, das durch das System-Steuersignal ausgewählt wird, das den Demodulationsmodus des Fernsehsystems auswählt,

und die des Weiteren ein zweites Tiefpassfilter zum Entfernen einer unerwünschten Rauschkomponente aus einem der durch den ACC-Steuerspannungs-Generator erfassten Niederfrequenzkomponenten-Signale,

eine Einrichtung zum Erzeugen eines lokalen Hilfsträgersignals, die in der Lage ist, die Oszillationsfrequenz durch die Steuerspannung zu variieren, um das Sinus-Signal und das Kosinus-Signal des lokalen Hilfsträger-Signals auszugeben,

einen ersten Selektor, der entweder das als die Steuervorspannung voreingestellte unveränderliche Signal oder das Ausgangssignal des zweiten Tiefpassfilters mit dem Systemsteuersignal auswählt und zu der Einrichtung zum Erzeugen eines lokalen Hilfsträgersignals sendet, und

einen zweiten Selektor, der entweder die durch den ACC-Steuerspannungs-Generator erfassten Niederfrequenzkomponenten-Signale oder die Amplitude des Farb-Hilfsträgers mit dem Systemsteuersignal auswählt und sie/es zu der Subtrahiereinrichtung sendet,

wobei mit dem Systemsteuersignal der Farbsignal-Wiedergabemodus eines ersten oder eines zweiten Fernsehsystems ausgewählt wird.

3.  Vorrichtung zur Wiedergabe des Farbsignals eines Fernsehsignals nach Anspruch 1 oder 2, wobei der ACC-Steuerspannungs-Generator aus einem ersten kumulativen Addierer zum kumulativen Addieren der Y-Achsen-Signale der Burstgate-Impulsperiode und zum Entfernen von Niederfrequenzkomponenten zusammengesetzt ist,

und die des Weiteren einen zweiten kumulativen Addierer zum kumulativen Addieren der X-Achsen-Signale in der Burstgate-Impulsperiode und zum Entfernen von Niederfrequenzkomponenten, und

einen Amplituden-Detektor zum Quadrieren und Summieren der Ausgangssignale des ersten und des zweiten kumulativen Addierers sowie zum Erfassen der Amplitude des Farb-Hilfsträgersignals als die ACC-Steuerspannung umfasst.

4.  Vorrichtung zur Wiedergabe des Farbsignals eines Fernsehsignals nach Anspruch 3, wobei der Amplituden-Detektor einen dritten Multiplizierer zum Quadrieren des Ausgangssignals des ersten kumulativen Addierers umfasst,

und die des Weiteren einen vierten Multiplizierer zum Quadrieren des Ausgangssignals des zweiten kumulativen Addierers,

einen ersten Addierer zum Summieren der Ausgangssignale des dritten Multiplizierers und des vierten Multiplizierers, eine Verzögerungsschaltung zum Verzögern des Ausgangssignals des ersten Addierers um eine Horizontalabtastperiode, und

einen zweiten Addierer zum Summieren des Ausgangssignals der Verzögerungsschaltung und des Ausgangssignals des ersten Addierers sowie zum Ausgeben der durchschnittlichen Amplitude des Farb-Hilfsträgersignals als die ACC-Steuerspannung umfasst.

5.  Vorrichtung zur Wiedergabe des Farbsignals eines Fernsehsignals nach Anspruch 1 oder 2, wobei der ACC-Steuerspannungs-Generator einen digitalen Signalprozessor umfasst, der durchführt:

einen Schritt des kumulativen Addierens der Signale in der Burstgate-Impulsperiode aus dem X-Achsen-Signal und des Entfernens von Niederfrequenzkomponenten,

einen Schritt des kumulativen Addierens der Signale in der Burstgate-Impulsperiode aus dem Y-Achsen-Signal und des Entfernens von Niederfrequenzkomponenten,

einen Schritt des Quadrierens von Niederfrequenzkomponenten des X-Achsen-Signals bzw. des Y-Achsen-Signals und des Summierens der quadrierten Signale,

einen Schritt des Verzögerns des summierten Signals um eine Horizontalabtastperiode, und

einen Schritt des Addierens des verzögerten Signals und des nicht verzögerten Signals und des Ausgebens der durchschnittlichen Amplitude des Farb-Teilträgersignals.

6.  Vorrichtung zur Wiedergabe des Farbsignals eines Fernsehsignals nach Anspruch 2, wobei das zweite Tiefpassfilter aus einer Verzögerungsschaltung zum Verzögern des Eingangssignals um eine Horizontalabtastperiode, einem dritten Addierer, einem fünften Multiplizierer und einem sechsten Multiplizierer zusammengesetzt ist,

wobei der dritte Addierer die Ausgangssignale des ersten kumulativen Addierers und des sechsten Multiplizierers summiert,

die Verzögerungsschaltung das Ausgangssignal des dritten Addierers verzögert, der fünfte Multiplizierer den dritten Addierer mit einer Konstante multipliziert, und

der sechste Multiplizierer das Ausgangssignal der Verzögerungsschaltung mit einer Konstante multipliziert.

**7.** Vorrichtung zur Wiedergabe des Farbsignals eines Fernsehsignals nach Anspruch 2,
wobei das zweite Tiefpassfilter einen digitalen Signalprozessor umfasst, der durchführt:

einen Addierschritt,
einen Verzögerungsschritt zum Verzögern eines Signals um eine Horizontalabtastperiode,
einen ersten Multiplizierschritt, und
einen zweiten Multiplizierschritt,

wobei der Addierschritt den Ausgangswert des ersten kumulativen Addierers und den in dem ersten Multiplizierschritt multiplizierten Wert addiert,

der Verzögerungsschritt den in dem Addierschritt addierten Wert verzögert,

der erste Multiplizierschritt den in dem Verzögerungsschritt verzögerten Wert mit einer Konstante multipliziert, und

der zweite Multiplizierschritt den in dem Addierschritt addierten Wert mit einer Konstante multipliziert.

**Revendications**

**1.** Appareil de reproduction d'un signal couleur d'un signal de télévision, comprenant:

un filtre passe-bande pour séparer et délivrer un signal couleur de sous-porteuse provenant d'un signal vidéo composite SECAM et pour limiter la bande,

un dispositif de commande du gain pour ajuster et délivrer l'amplitude dudit signal couleur de sous-porteuse,

un séparateur de synchronisation pour séparer un signal de synchronisation provenant dudit signal vidéo composite et pour générer et délivrer une impulsion de porte de salve,

un premier multiplicateur pour multiplier le signal de sortie dudit dispositif de commande du gain par une composante sinusoïdale d'un signal de sous-porteuse local, et pour délivrer un signal par rapport à l'axe des Y,

un second multiplicateur pour multiplier le signal de sortie dudit dispositif de commande du gain par une composante cosinusoïdale du signal de sous-porteuse local, et pour délivrer un signal par rapport à l'axe des X,

un générateur de tension de commande ACC (commande adaptative à contrainte) pour additionner cumulativement ledit signal par rapport à l'axe des X et ledit signal par rapport à l'axe des Y pendant ladite période d'impulsion de porte de salvé, pour détecter des composantes basse fréquence du signal par rapport à l'axe des X et du signal par rapport à l'axe des Y, respectivement, pour élever au carré et sommer chaque signal additionné cumulativement et pour détecter l'amplitude de la sous-porteuse couleur,

un soustracteur pour calculer la différence entre l'amplitude de la sous-porteuse couleur détectée par ledit générateur de tension de commande ACC et un signal de référence spécifié,

un premier filtre passe-bas pour filtrer les composantes haute fréquence provenant du signal de sortie dudit soustracteur, et

un générateur de signal de différence de couleur pour générer un signal de différence de couleur provenant dudit signal par rapport à l'axe des X et dudit signal par rapport à l'axe des Y.

**2.** Appareil de reproduction d'un signal couleur d'un signal de télévision comme revendiqué dans la revendication 1, dans lequel

ledit générateur de signal de différence de couleur pour générer un signal de différence de couleur délivre, en outre, un signal de différence de couleur du système de télévision sélectionné par le signal de commande du système qui sélectionne le mode de démodulation du système de télévision,

et comprenant en outre :

un second filtre passe-bas pour enlever une composante de bruit non souhaitée provenant de l'un des signaux avec la composante basse fréquence détectés par ledit générateur de tension de commande ACC,

un générateur de signal de sous-porteuse local capable de modifier la fréquence d'oscillation par la tension de commande pour délivrer ledit signal sinusoïdal et ledit signal cosinusoïdal dudit signal de sous-porteuse local,

un premier sélecteur pour sélectionner soit le signal fixé préréglé comme étant ladite tension de commande, soit le signal de sortie dudit second filtre passe-bas par ledit signal de commande du système, et pour le transmettre au dit générateur de signal de sous-porteuse local, et

un second sélecteur pour sélectionner soit l'un des signaux avec la composante basse fréquence détectés par ledit générateur de tension de commande ACC, soit l'amplitude de la sous-porteuse couleur par ledit signal de commande du système, et pour le transmettre au dit soustracteur,

dans lequel le mode de reproduction du signal couleur du premier ou du second système de télévision est sélectionné par ledit signal de commande du système.

3. Appareil de reproduction d'un signal couleur d'un signal de télévision selon la revendication 1 ou 2, dans lequel ledit générateur de tension de commande ACC est composé d'un premier additionneur cumulatif pour additionner cumulativement lesdits signaux sur l'axe des X pendant ladite période d'impulsion de porte de salve, et pour enlever les composantes basse fréquence,

et comprenant en outre :

un second additionneur cumulatif pour additionner cumulativement lesdits signaux sur l'axe des X pendant ladite période d'impulsion de porte de salve, et pour enlever les composantes basse fréquence, et

un détecteur d'amplitude pour élever au carré et sommer les signaux de sortie desdits premier et second additionneurs cumulatifs et pour détecter l'amplitude du signal couleur de sous-porteuse comme étant la tension de commande ACC.

4. Appareil de reproduction d'un signal couleur d'un signal de télévision selon la revendication 3, dans lequel ledit détecteur d'amplitude comprend un troisième multiplicateur pour élever au carré le signal de sortie dudit premier additionneur cumulatif,

et comprenant en outre:

un quatrième multiplicateur pour élever au carré le signal de sortie dudit second additionneur cumulatif,

un premier additionneur pour sommer les signaux de sortie dudit troisième multiplicateur et dudit quatrième multiplicateur,

un circuit de temporisation pour retarder le signal de sortie dudit premier additionneur d'une période de balayage horizontal, et

un second additionneur pour sommer le signal de sortie dudit circuit de temporisation et le signal de sortie dudit premier additionneur, et pour délivrer l'amplitude moyenne du signal couleur de sous-porteuse comme étant la tension de commande ACC.

5. Appareil de reproduction d'un signal couleur d'un signal de télévision selon la revendication 1 ou 2, dans lequel ledit générateur de tension de commande ACC comprend un processeur de signal numérique effectuant:

une étape consistant à additionner cumulativement les signaux pendant ladite période d'impulsion de porte de salve provenant dudit signal par rapport à l'axe des X, et à enlever les composantes basse fréquence,

une étape consistant à additionner cumulativement les signaux pendant ladite période d'impulsion de porte de salve provenant dudit signal par rapport à l'axe des Y, et à enlever les composantes basse fréquence,

une étape consistant à élever au carré les composantes basse fréquence dudit signal par rapport à l'axe des X et dudit signal par rapport à l'axe des Y, respectivement, et à sommer les signaux élevés au carré,

une étape consistant à retarder le signal sommé d'une période de balayage horizontal, et

une étape consistant à additionner le signal différé et le signal non différé et à délivrer l'amplitude moyenne dudit signal couleur de sous-porteuse.

6. Appareil de reproduction d'un signal couleur d'un signal de télévision selon la revendication 2, dans lequel ledit second filtre passe-bas est composé d'un circuit de temporisation pour retarder le signal d'entrée d'une période de balayage horizontal, d'un troisième additionneur, d'un cinquième multiplicateur et d'un sixième multiplicateur,

ledit troisième additionneur somme les signaux de sortie dudit premier additionneur cumulatif et dudit sixième multiplicateur,

ledit circuit de temporisation retarde le signal de sortie dudit troisième additionneur,

ledit cinquième multiplicateur multiplie ledit troisième additionneur par une constante, et

ledit sixième multiplicateur multiplie le signal de sortie dudit circuit de temporisation par une constante.

**7.** Appareil de reproduction d'un signal couleur d'un signal de télévision selon la revendication 2, dans lequel ledit second filtre passe-bas comprend un processeur de signal numérique effectuant :

une étape d'addition,
une étape de temporisation pour retarder un signal d'une période de balayage horizontal,
une première étape de multiplication, et
une seconde étape de multiplication,

dans lequel ladite étape d'addition additionne la valeur de sortie dudit premier additionneur cumulatif et la valeur multipliée à ladite première étape de multiplication,
ladite étape de temporisation retarde la valeur additionnée à ladite étape d'addition,
ladite première étape de multiplication multiplie la valeur retardée à ladite étape de temporisation par une constante, et
ladite seconde étape de multiplication multiplie la valeur additionnée à ladite étape d'addition par une constante.

# FIG. 1

SECAM Composite Video signal 118 → BPF 101 → Gain Controller 102

SIN signal 119 / COS signal 120

104

106 ACC Control Voltage Generator

107 Cumulative Adder → 112 → 114

105

108 Cumulative Adder → 113 → 115 1HLD 116

193

103 Sync. Separator

123

110 LPF ← 109 →

111 Ref. signal

117

150 LPF → 151 → SECAM Demodulator → 121 R-Y signal

152 → 122 B-Y signal

Color Difference Signal Generator 152

EP 1 181 819 B1

# FIG. 2

## FIG. 3

Composite Video signal 311

301 BPF

302 Gain Controller

312 SIN signal

313 COS signal

303 ⊗

304 ⊗

305 Color Difference Signal Generator

330 LPF

331 LPF

332 SECAM Demodulator

314 R-Y signal

315 B-Y signal

300

306 Full-Wave Rctifier

307 MAX Detector

308 ⊖ ⊖

309 LPF

310 Sync. Separator

317 Ref. signal

316

SECAM ACC Control Voltage Generator

EP 1 181 819 B1

# FIG. 4

# FIG. 5

(a)

(b)

(c)

(d)

## FIG. 6

(a)

(b)

(c)

0

(d)

0

(e)

(f)

(g)

0

(h)

0

## FIG. 7

## FIG. 8

## FIG. 9

List of Reference Numerals

| | |
|---|---|
| 101, 201 | BPF |
| 102, 202 | Gain controller |
| 103, 203 | Synchronizing separator |
| 104, 204 | First multiplier |
| 105, 205 | Second multiplier |
| 106, 206 | ACC control voltage generator |
| 107, 207 | First cumulative adder |
| 108, 208 | Second cumulative adder |
| 109, 209 | Subtractor |
| 110, 210 | First LPF |
| 112, 256 | Third multiplier |
| 113, 257 | Fourth multiplier |
| 114, 258 | First adder |
| 115, 259 | First 1HDL |
| 116, 260 | Second adder |
| 117, 219, 212 | Color difference signal generator Second LPF |
| 193, 213 | Amplitude detector |
| 214 | Local subcarrier signal generator |
| 215 | First selector |
| 216 | Second selector |
| 250 | Third adder |
| 251 | Fifth multiplier |
| 252 | Second 1HDL |
| 253 | Sixth multiplier |